# FASCICULE DE BREVET EUROPEEN

(11) **EP 2 398 706 B1**
(45) Date de publication et mention de la délivrance du brevet: **10.06.2015**
(21) Numéro de dépôt: 10708345.3
(22) Date de dépôt: 15.02.2010
(51) Int. Cl.: B64D 27/26, F02C 7/20

(54) **ATTACHE MOTEUR A COURBE CHARGE/DEFORMATION ADAPTEE**
TRIEBWERKSAUFHÄNGUNG MIT ANGEPASSTER NACHGIEBIGKEIT
ENGINE ATTACHMENT HAVING A TAILORED RESILIENCY

(30) Priorité: 18.02.2009 FR 0951044
(43) Date de publication de la demande: 28.12.2011
(73) Titulaire: Airbus Operations (S.A.S.), 31060 Toulouse Cedex 9 (FR)
(72) Inventeur: QUIROZ-HERNANDEZ, Esteban, F-31000 Toulouse (FR)
(74) Mandataire: Gicquel, Olivier Yves Gérard
(86) Numéro de dépôt international: PCT/FR2010/050248
(87) Numéro de publication internationale: WO 2010/094878

(56) Documents cités:
- EP-A- 1 607 330
- FR-A- 2 179 072
- FR-A- 2 872 784
- GB-A- 582 005
- US-A- 5 244 170

## Description

L'invention se situe dans le domaine de l'aéronautique. Plus précisément, l'invention concerne une attache apte à relier un moteur d'un aéronef à la structure de l'aéronef, par exemple à une aile ou au fuselage arrière. On nommera par la suite « attache moteur » une telle attache.

Idéalement, la fonction d'une attache moteur est double. Tout d'abord, elle doit contraindre la mobilité du moteur par rapport à la structure de l'aéronef. Ensuite elle doit apporter une isolation contre les vibrations et une réduction du bruit.

La réalisation de ces deux fonctions fait appel à des qualités contradictoires de l'attache en termes de rigidité. En effet, pour réaliser la fonction de limitation des mouvements relatifs du moteur et de la structure de l'aéronef, l'attache doit être rigide, tandis que pour réaliser la fonction d'atténuation du bruit et des vibrations, elle doit être souple. C'est pourquoi généralement un compromis doit être fait entre les deux fonctions attendues d'une attache moteur.

Le choix de l'attache est également conditionné par l'environnement rencontré à proximité du moteur, spécifique en termes de température, de présence de substances chimiques, d'espace réduit.

Typiquement, des attaches métalliques rigides sont utilisées, mais elles ne permettent pas d'atténuer le bruit et les vibrations du moteur de manière satisfaisante.

Dans le cas de l'utilisation d'attaches souples en élastomère, on constate une résistance insuffisante aux températures élevées et aux pollutions chimiques présentes à proximité du moteur. Leur durée de vie est très réduite par rapport aux attaches métalliques. De plus, elles doivent être d'un volume et d'un poids importants pour supporter de lourdes charges.

Le document EP1607330 décrit un dispositif d'absorption de chocs comportant un montage souple de raideur K1 et un ressort métallique de type rondelle Belleville de raideur K2. En fonctionnement normal, la rondelle Belleville est inactive, l'absorption des chocs est garanti par le montage souple. Lorsqu'un phénomène dit de « blade off » survient, s'accompagnant de grandes oscillations du moteur, l'amortissement des vibrations est assuré par la combinaison du montage souple et de la rondelle Belleville, de raideur totale K1 + K2. Ainsi deux systèmes distincts sont nécessaires pour permettre l'absorption des vibrations en fonction du type de vibrations. Par ailleurs, ce document n'offre pas un compromis entre les deux fonctions contradictoires précitées de rigidité et souplesse. Il existe donc un besoin d'une structure d'aéronef comprenant une attache moteur destinée à relier un moteur à une structure d'aéronef. L'attache moteur permettant de réduire le compromis à réaliser entre d'une part l'absorption des vibrations et du bruit du moteur et d'autre part la contrainte sur la mobilité relative du moteur et de la structure, tout en étant compatible avec une mise en place dans l'environnement proche du moteur.

La revendication 1 propose une telle structure d'aéronef comprenant une telle attache. Le moteur en fonctionnement applique des charges sur l'attache.

La structure d'aéronef est adaptée pour vérifier les conditions suivantes :
- la raideur de l'attache pour des valeurs de charges, comprises dans une plage déterminée est inférieure à la raideur pour les valeurs de charges inférieures, respectivement supérieures, à la plage déterminée ;
- considérant une première valeur de charge correspondant à un mode de fonctionnement opérationnel, les valeurs de charge sur le ressort résultant des variations dynamiques lors dudit premier mode de fonctionnement autour de ladite première valeur de charge se trouvent dans la plage déterminée ; et
- l'attache comporte des moyens limitant le déplacement du ressort à une valeur maximum donnée lors de l'application d'une charge d'une valeur supérieure à la plage déterminée.

La structure d'aéronef selon l'invention permet donc de minimiser le compromis entre une déformation maximum autorisée (requérant une forte rigidité) et une isolation efficace contre les vibrations (requérant une faible rigidité).

Les moyens limitant le déplacement du ressort restreignent ce déplacement à une valeur maximum donnée lors de l'application d'une charge d'une valeur supérieure à la plage déterminée, la valeur maximum donnée étant strictement inférieur au déplacement maximum pouvant être nominalement effectué par le ressort.

En effet, lorsque le premier mode de fonctionnement correspond par exemple au fonctionnement régulier rencontré en croisière de l'aéronef, l'invention permet de réaliser une bonne isolation contre les vibrations survenant en ce régime régulier de croisière, tout en assurant une bonne rigidité de l'attache dans des modes de fonctionnement autres, telles que le mode de montée en charge vers le fonctionnement régulier en croisière ou encore les cas de surcharge.

L'utilisation d'un ressort métallique, par sa résistance aux températures élevées et aux agressions chimiques, permet à l'attache moteur d'être utilisée dans l'environnement du moteur.

Les moyens limitant le déplacement comportent au moins une butée limitant le déplacement du ressort lors de l'application d'une charge d'une valeur supérieure à la plage déterminée.

Le ressort métallique est un ressort métallique à disques. Ce type de ressort occupe une place très limitée par rapport aux autres types de ressort métallique et présente un poids réduit pour un même niveau de force.

L'attache comporte des moyens de butée empêchant l'écrasement du ressort lors de l'application d'une charge supérieure à la plage déterminée. Cette disposition garantit une raideur du ressort, pour des valeurs de charges sur le ressort supérieures à la plage déterminée, supérieure à la raideur du ressort pour les valeurs de charges dans la plage déterminée. Cette disposition permet de fixer la valeur supérieure de la plage. Elle permet en outre d'augmenter la durée de vie de l'attache.

L'attache comporte un dispositif apte à exercer une précontrainte sur le ressort (de type Belleville ou non), la valeur inférieure de la plage déterminée étant fixée au moins par une précontrainte exercée par ce dispositif. Cette disposition contribue à l'obtention d'une courbe force/déplacement à la forme souhaitée, c'est-à-dire qu'elle permet de fixer la raideur voulue en fonction des forces appliquées à l'attache par le moteur.

En outre, cette disposition permet de contrôler le déplacement relatif entre le moteur et la structure, ce qui est un paramètre de conception crucial dans le cadre de l'intégration du moteur et de la structure de l'aéronef. Elle permet en outre d'augmenter la durée de vie de l'attache.

Dans un mode de réalisation, ce dispositif est adapté pour faire varier la précontrainte exercée en fonction d'au moins une valeur de charge statique courante appliquée sur le ressort, ce qui est utile lorsque la charge statique dans le premier mode de fonctionnement, par exemple lors du fonctionnement opérationnel régulier en croisière, présente une variabilité importante.

L'invention sera mieux comprise à la lecture de la description qui suit et à l'examen des figures qui l'accompagnent. Ces figures sont données à titre illustratif, mais nullement limitatif de l'invention. Ces figures montrent :
- la figure 1 représente une courbe donnant la relation entre la charge et le déplacement d'un ressort compris dans une attache moteur dans un mode de réalisation de l'invention ;
- la figure 2 présente des courbes de ressorts à disques métalliques ;
- la figure 3 représente une attache dans un mode de réalisation de l'invention ;
- les figures 4 et 5 représentent des courbes donnant la relation entre la charge et le déplacement d'un ressort compris dans une attache moteur dans des modes de réalisation de l'invention ;
- la figure 6 représente une attache non revendiquée;
- la figure 7 représente une attache dans un mode de réalisation de l'invention ;
- la figure 8 représente une attache dans un mode de réalisation.

La présente invention concerne une attache moteur destinée à maintenir un moteur fixé à la structure d'un aéronef et à transmettre les efforts normaux et exceptionnels entre le moteur et la structure.

L'attache moteur comporte un ressort reprenant des charges provenant du moteur et devant cheminer dans l'attache.

Le ressort est un ressort métallique à disques, notamment des disques connus sous la désignation de rondelles Belleville.

En raison de l'agencement d'éléments de l'attache, la dite attache présente trois modes de fonctionnement lors de l'utilisation opérationnelle de l'attache.

Ces trois modes sont caractérisés par des raideurs différentes de l'attache qui identifient :
- un mode à rigidité réduite associé à un fonctionnement nominal du moteur, dit mode MF2 ;
- un premier mode à rigidité élevée associée à un fonctionnement avec des charges sur l'attache inférieures à des charges du mode MF2, dit mode MF1 ;
- un second mode à rigidité élevée associé à un fonctionnement avec des charges sur l'attache supérieures aux charges du mode MF2, dit mode MF3.

Dans le mode de fonctionnement nominal MF2, la charge appliquée par le moteur sur l'attache est comprise entre deux valeurs nominales extrêmes.

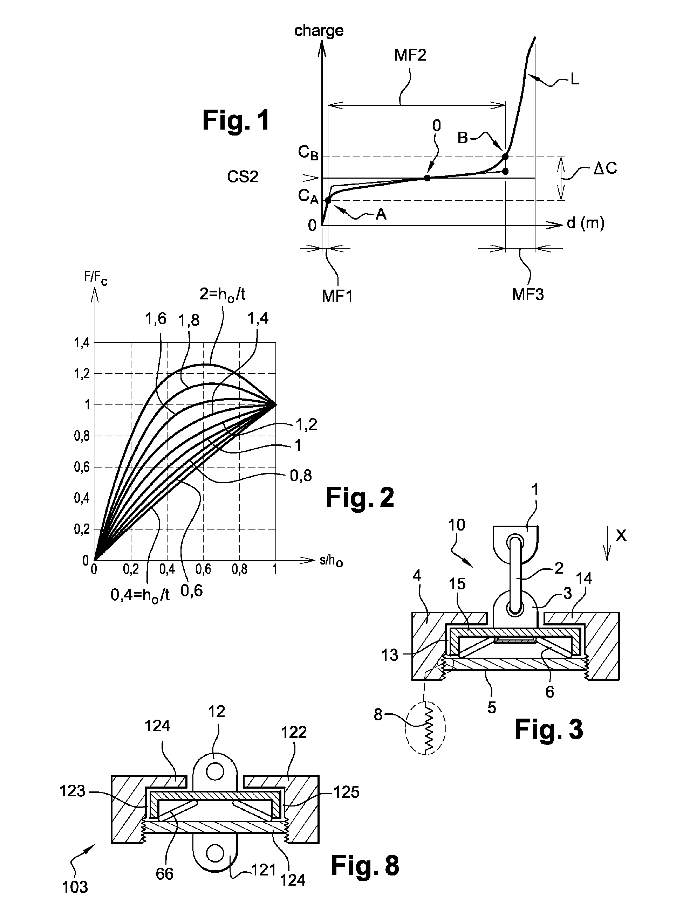

En référence à la figure 1, ces deux valeurs nominales extrêmes CA et CB, identifiées sur la courbe caractéristique de la figure 1 par les points respectivement A et B de la courbe, sont déterminées principalement par la plage de variation dynamique des efforts transmis par l'attache en fonctionnement nominal du moteur qui peut être considérée comme une plage centrée sur une valeur moyenne des efforts, dite charge statique CS2, correspondant au point O de la courbe, et dont les variations correspondent à des variations dynamiques des efforts autour de cette charge statique CS2.

La plage des variations dynamiques autour de CS2 en mode MF2 est déterminée par son amplitude totale ΔC.

Avantageusement les caractéristiques de raideur des éléments ressorts sont déterminées pour que le point O de la courbe caractéristique de l'attache corresponde à un point nominal de fonctionnement de l'attache autour duquel une filtration efficace des vibrations est souhaité, et pour que les valeurs extrêmes CA et CB déterminent une plage d'effort à transmettre par l'attache telle que la superposition de la charge statique et des charges dynamiques dont la filtration est recherchée soit principalement comprise entre lesdites valeurs extrêmes.

Le premier mode de fonctionnement à rigidité élevée MF1 est associé sur la courbe caractéristique de l'attache au cas où des efforts à transmettre sont inférieurs à la valeur extrême inférieure CA du mode de fonctionnement nominal MF2.

Un tel cas correspond par exemple à une attache qui ne serait pas chargée ou avec une charge statique sensiblement inférieure à CS2, par exemple lorsque la poussée du moteur est réduite si l'attache considérée transmet une poussée, condition non nominale pour laquelle une filtration des vibrations n'est pas essentielle, par exemple en raison de la faible amplitude des vibrations ou de la courte durée de leur application, et pour laquelle le déplacement du moteur doit cependant rester limité.

Le second mode de fonctionnement à rigidité élevé MF3 est associé sur la courbe caractéristique de l'attache au cas où des efforts à transmettre sont supérieurs à la valeur extrême supérieure CB du mode de fonctionnement nominal MF2.

Un tel cas correspond par exemple à une attache qui serait fortement chargée momentanément, par exemple lorsque la poussée du moteur est élevée au cours d'une phase de décollage ou lorsque les efforts d'inertie sont augmentés en raison d'un facteur de charge, situations de courte durée pour lesquelles un niveau de vibration supérieur est acceptable et pour lesquelles les déplacement du moteur doivent être limités.

Les premier et second modes de fonctionnement à rigidité élevé MF1 et MF3 sont également mis en oeuvre lorsque les charges dynamiques appliquées à une charge statique du mode de fonctionnement nominal MF1 conduisent à des efforts qui sortent de l'intervalle des valeurs extrêmes inférieure CA et supérieure CB dudit mode nominal, par exemple en raison de vibrations d'amplitudes exceptionnellement ou anormalement élevées.

Des vibrations d'amplitudes exceptionnelles se produisent par exemple lors du vol dans des turbulences aérodynamiques qui peuvent être normales en intensité, mais rencontrées avec une probabilité suffisamment faible pour ne pas justifier d'un surdimensionnement des capacités d'amortissement des vibrations par l'attache.

Des vibrations anormalement élevées se produisent en particulier en cas de balourd important du moteur, par exemple dans un cas de fonctionnement en moulinet après une rupture de pale de turbine.

Le ressort est adapté de manière à obtenir une courbe fournissant la déformation d, en mètres, de ce ressort en fonction de la charge qui lui est appliquée, qui présente les caractéristiques précisées ci-après.

En référence à la figure 1, le ressort est rigide depuis le point correspondant à une charge nulle jusqu'au point A de la courbe L correspondant à la charge CA.

Le ressort est souple depuis le point A jusqu'au point B de la courbe L correspondant à la charge CB supérieure à CA. Il présente des déplacements importants pour des charges appliquées sur le ressort comprises entre les charges CA et CB. Il contribue donc à filtrer efficacement les vibrations sur la plage de la courbe L située entre les charges CA et CB.

Le ressort est rigide au-delà du point B de la courbe L, pour des charges supérieures à CB.

En outre le ressort est adapté pour que les coordonnées des points A et B de la courbe charge/déformation L soient telles que chaque charge prévue sur le ressort en mode MF2 soit comprise entre CA et CB.

Dans un mode de réalisation, la charge statique CS2 est définie comme valeur moyenne des charges nominales extrêmes correspondant aux points A et B.

Dans un mode de réalisation, le ressort est en outre adapté pour que les coordonnées du point A de la courbe charge/déformation L soient telles que les charges estimées subies par le ressort en mode MF1 soient inférieures à CA.

Dans un mode de réalisation, le ressort est en outre adapté pour que les coordonnées du point B de la courbe charge/déformation L soient telles que les charges estimées subies par le ressort en mode MF3 soient supérieures à CB.

Ainsi le ressort présente des déplacements très réduits pour des charges appliquées sur le ressort qui sont inférieures à la charge CA et pour des charges supérieures à la charge CB. Il contribue donc à rigidifier l'attache moteur en cas d'application de telles charges.

Le ressort présente par ailleurs des déplacements importants pour des charges appliquées sur le ressort comprises entre les charges CA et CB et contribue donc à filtrer efficacement les vibrations sur la plage de la courbe L située entre les charges CA et CB.

Une attache moteur équipée d'un ressort associée à une telle courbe charge/déformation permet de minimiser le compromis à réaliser entre les besoins de rigidité, pour limiter les déplacements relatifs entre la structure de l'aéronef (dans les modes de fonctionnement MF1 et MF3) et le moteur, et les besoins en termes d'isolation de la structure contre les vibrations du moteur (dans le mode de fonctionnement MF2).

Il existe différents moyens d'adaptation d'un ressort permettant d'obtenir une courbe charge/déformation associée présentant les caractéristiques souhaitées.

Un moyen est par exemple d'exploiter les caractéristiques non-linéaires intrinsèques d'un ressort à disques métalliques et d'ajouter au moins une butée.

En effet, la courbe charge/déformation d'un ressort à disques métallique, par exemple de type rondelle Belleville, est par nature non-linéaire et sa forme dépend notamment du rapport entre sa hauteur et son épaisseur, comme représenté en figure 2 pour des valeurs de rapport entre 0,4 et 2 (cf. standard DIN 2092, «Disc Springs - Calculation »). En référence à la figure 2, F est la charge sur le ressort, Fc est la charge sur le ressort quand le ressort est en position aplatie, s est l'aplatissement ou écrasement de la rondelle (0 ≤ s ≤ h0), t est l'épaisseur de la rondelle et h0 est la hauteur à vide sans l'épaisseur de la rondelle.

Afin d'obtenir la courbe désirée en exploitant ces propriétés intrinsèques de non-linéarité, des moyens de butées sont disposés dans l'attache de manière à empêcher que le ressort à disques ne soit pas comprimé au-delà d'une compression maximum déterminée, correspondant à une hauteur de ressort minimum déterminée, supérieure strictement à la position aplatie.

Cette dernière disposition permet de régler la valeur CB et d'obtenir la courbe charge/déformation ayant la forme finale souhaitée, en remplaçant la partie droite d'une courbe de départ telle que représentée en figure 2 par une partie similaire à celle correspondant à des charges supérieures à CB sur la figure 1.

Un autre moyen pour obtenir la courbe charge/déformation désirée est par exemple de précontraindre un ressort à disques métalliques et d'ajouter au moins une butée de manière à empêcher que le ressort à disques n'atteigne la position aplatie.

Dans un tel cas, les propriétés intrinsèques de non-linéarité d'un ressort métallique à disques ne sont pas exploitées. On se base sur la capacité du ressort à disques de produire des forces importantes tout en occupant un faible encombrement, pour garder l'attache compacte.

En figure 3 est représentée, en section transversale, une attache moteur 10 d'un aéronef dans un mode de réalisation de l'invention. L'attache 10 comporte un élément 1 de raccordement au moteur, une barre 2, un élément 3 de raccordement à la structure 4 de l'aéronef, une base à visser 5 et un ressort 6 à disques métallique qui est, dans le cas représenté, une rondelle Belleville.

La structure 4 de l'aéronef comporte une cavité intérieure 13 surplombée par un surplomb 14.

La partie inférieure 15 de l'élément 3 de raccordement est en forme de cloche et est logée dans la cavité intérieure 13 de la structure 4 de l'aéronef.

Le ressort 6 est disposé entre la partie inférieure 15 de l'élément 3 de raccordement et la base à visser 5.

Un logement est ménagé dans la partie inférieure 15 en forme de cloche de l'élément 3, adapté pour y loger le ressort 6.

La base à visser 5 est disposée dans la cavité intérieure 13 de la structure 4 de l'aéronef, sous le ressort 6. Elle est engagée dans un pas de vis 8 dont la surface de la cavité intérieure 13 de la structure 4 est munie.

Les charges statiques et dynamiques en provenance du moteur sont transmises à l'attache 10 par l'élément 1 de raccordement au moteur. La barre 2 garantit que ces charges sont transmises au ressort 6 selon un seul axe X.

La précontrainte est appliquée sur le ressort 6 avant l'utilisation opérationnelle de l'attache, par vissage dans le pas de vis 8 de la base à visser 5. Ceci a pour effet de comprimer le ressort 6 contre l'élément 3 de raccordement au sein de sa partie inférieure 15 et contre le surplomb 14 de la structure 4 de l'aéronef. La partie inférieure 15 de l'élément de raccordement 3 est ainsi également pressée contre le surplomb 14 de la structure 4 de l'aéronef.

Le fait de précontraindre le ressort permet de définir la déformation du ressort (paramètre important dans le cadre de la conception de l'intégration du moteur dans l'aéronef), et notamment de fixer une valeur de charge CA, à partir de laquelle le ressort se déforme, qui soit plus haute que la valeur de base du ressort non précontraint.

Quand la charge statique opérationnelle est appliquée (la charge de valeur CS2 du mode MF2), l'élément 3 de raccordement à la structure de l'aéronef ne doit plus être en contact avec la structure 4 de l'aéronef. Ainsi la partie inférieure 15 de l'élément de raccordement 3 n'est alors plus en appui sur le surplomb 14 de la structure 4 de l'aéronef.

La charge opérationnelle est alors portée uniquement par le ressort 6. Quand la charge opérationnelle nominale est dépassée (charge supérieure à CB), la partie inférieure 15 de l'élément 3 de raccordement à la structure de l'aéronef doit entrer en contact avec la base à visser 5, cette disposition donnant ainsi lieu à une butée pour le ressort 6, empêchant un écrasement plus important pour le ressort que celui délimité par la hauteur intérieure de la partie en cloche 15. Le ressort 6 ne peut donc être comprimé plus que la compression correspondant à l'application de la charge CB sur l'attache. La hauteur minimale du ressort 6 en fonctionnement correspond donc à la hauteur de la partie 15 en forme de cloche.

Ceci garantit que l'attache 10 rigidifie alors l'ensemble de la structure et du moteur. La charge minimale pour laquelle l'élément 3 de raccordement à la structure de l'aéronef entre en contact avec la base à visser 5 correspond à la valeur CB de la courbe charge/déformation.

L'application de la précontrainte permet de garantir que l'attache rigidifie l'ensemble de la structure et du moteur tant qu'une charge inférieure à la plage [CA, CB] est appliquée.

La fatigue du ressort est limitée, grâce à l'utilisation d'une précontrainte et/ou d'une butée puisque la déformation du ressort est limitée à un intervalle proche du point de fonctionnement nominal de charge CS2.

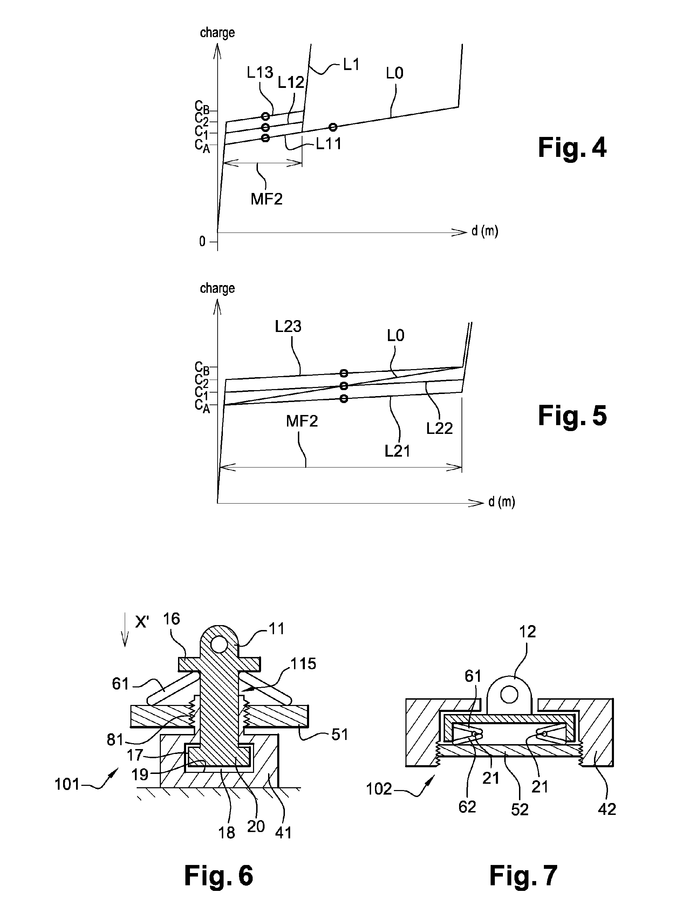

En figure 6 est représentée, en section transversale, une attache moteur 101 d'un aéronef qui ne fait pas partie de la présente invention.

L'attache moteur 101 comporte un élément 11 de raccordement au moteur, un ressort 61 à disques métalliques (une rondelle Belleville dans le cas ici représenté) et une base à visser 51.

L'élément 11 de raccordement au moteur, qui relie le moteur à la structure 41 de l'aéronef, comporte une partie intermédiaire cylindrique 115 entre une première extrémité destinée à être reliée au moteur et comportant une embase 16, et entre une seconde extrémité 20 comportant un épaulement 17 et destinée à la liaison avec la structure 41.

Les charges statiques et dynamiques en provenance du moteur sont transmises à l'attache 101 par l'élément 11 de raccordement au moteur selon un axe X'.

Le ressort 61 enserre la partie intermédiaire cylindrique 115 de l'élément 11 et ses mouvements en direction du moteur selon l'axe X' sont limités par l'embase 16.

La structure 41 comporte une cavité 18 logeant la partie intermédiaire cylindrique 115 et la seconde extrémité de l'élément 11 de raccordement au moteur et permettant ainsi une liaison entre l'élément 11 de raccordement au moteur et la structure 41, avec un jeu relatif selon l'axe X' entre les mouvements de la structure 41 et de l'élément de raccordement 11.

Ce jeu est limité dans une direction selon l'axe X' lors de la mise en appui de la partie inférieure 20 de la seconde extrémité de l'élément 11 sur la partie 19 de la structure 41 délimitant la partie inférieure de la cavité 18 et dans l'autre direction selon l'axe X' par l'appui de l'épaulement 17 sur la partie de la structure 41 faisant face à l'épaulement 17 selon l'axe X'.

La surface extérieure de la structure 41 au niveau de la partie intermédiaire cylindrique 115 de l'élément 11 présente un pas de vis 81 sur lequel la base à visser 51 est vissée.

La précontrainte sur le ressort 61 est appliquée par vissage de la base à visser 51 autour de l'élément 11, pressant ainsi le ressort 61 sur l'embase 16 de l'élément de raccordement 11.

La fonction de butée lors de charge appliquée en compression sur l'attache 101 et excédant la valeur CB est assurée par l'appui de la partie inférieure 20 de la seconde extrémité de l'élément 11 sur la partie 19 de la structure 41.

Ce mode de réalisation est particulièrement avantageux en termes d'encombrement.

Dans un mode de réalisation représenté en figure 7, une attache moteur 102 représentée en section transversale comprend un élément 12 de raccordement au moteur, une pièce à visser 52 sur la structure 42 de l'aéronef et des ressorts 61, 62 à disques métallique, par exemple une rondelle Belleville. Le fonctionnement de cette attache est similaire à celui décrit en référence à la figure 3 (l'élément 3 et la structure 4 de la figure 3 étant ici remplacés par la seule structure 42). Les ressorts 61, 62 sont disposés en piles, de manière à ajuster les caractéristiques de la courbe charge/déformation et à augmenter la flexibilité de l'attache. En outre, des billes de roulement 21 peuvent être ajoutées entre les ressorts 61, 62 disposés en piles, de manière à réduire les frictions entre ces ressorts empilés qui peuvent bloquer l'attache en cas de faibles charges dynamiques.

Dans un mode de réalisation représenté en figure 8 dans lequel l'attache n'est pas logée dans la structure, une attache moteur 103 représentée en section transversale comprend un élément de raccordement 12 au moteur et un élément périphérique 122 ménageant un logement intérieur 123 surplombé par un épaulement 124 disposé autour de l'élément 12 de raccordement au moteur.

La partie inférieure de l'élément périphérique 122 comporte un pas de vis sur lequel s'engage une base à visser 124 se prolongeant dans sa partie inférieure par un élément 121 de raccordement à la structure.

L'élément 12 de raccordement au moteur se prolonge dans sa partie inférieure par un élément en forme de cloche 125, qui est logé dans le logement 123.

Un ressort métallique 66 est disposé entre la base à visser 124 et l'élément en forme de cloche 125.

Le fonctionnement est similaire à celui commenté ci-dessus en référence à la figure 3. Dans un mode de réalisation de l'invention, le niveau de précontrainte est adapté au cours du vol de l'aéronef, en mode MF2, ce qui est particulièrement utile lorsque la charge statique opérationnelle présente d'importantes variations. L'adaptation du niveau de précontrainte est accomplie par exemple à l'aide d'un servomoteur ou d'un piston permettant, dans les cas décrits en référence aux figures 3 et 7, de serrer ou desserrer la base à visser.

L'adaptation du niveau de précontrainte peut être exploitée de deux manières distinctes. Elle peut permettre, en mode MF2, de réduire la plage de déformation du ressort, tout en gardant la même rigidité du ressort ou encore de réduire la rigidité en gardant la même plage de déformation du ressort.

Sur la figure 4 sont représentées les courbes L0 et L1 de charge/déformation pour un ressort d'une attache moteur. L0 est la courbe d'une attache moteur selon l'invention par exemple du type représenté en figure 3, sans adaptation du niveau de précontrainte en fonction de la charge statique courante.

L1 est la courbe obtenue pour la même attache moteur dans laquelle la précontrainte appliquée est adaptée en fonction de la charge statique courante, mesurée en temps réel en mode de fonctionnement MF2. Ainsi 3 niveaux différents de précontrainte sont appliqués au ressort de l'attache en fonction de la valeur de la charge statique courante correspondant aux trois portions L11, L12 et L13 de la courbe L1.

Lorsque la charge statique courante mesurée est entre CA et C1, la portion de la courbe charge/déformation L1 de l'attache est L11.

Lorsque la charge statique courante mesurée est entre C1 et C2, la portion de la courbe charge/déformation L1 de l'attache est L12.

Lorsque la charge statique courante mesurée est entre C2 et CB, la portion de la courbe charge/déformation de l'attache L1 est L13.

Sur la figure 5 sont représentées les courbes L0 et L2 de charge/déformation pour un ressort d'une attache moteur. L0 est la courbe d'une attache moteur selon l'invention par exemple du type représenté en figure 3, sans adaptation du niveau de précontrainte en fonction de la charge statique courante.

L2 est la courbe obtenue pour la même attache moteur dans laquelle la précontrainte appliquée est adaptée en fonction de la charge statique courante, mesurée en temps réel en mode de fonctionnement MF2. Ainsi 3 niveaux différents de précontrainte sont appliqués en fonction de la valeur de la charge statique courante, correspondant aux trois portions L21, L22 et L23 de la courbe L2.

Lorsque la charge statique courante mesurée est entre CA et C1, la portion de la courbe charge/déformation L1 de l'attache est L21.

Lorsque la charge statique courante mesurée est entre C1 et C2, la portion de la courbe charge/déformation L1 de l'attache est L22.

Lorsque la charge statique courante mesurée est entre C2 et CB, la portion de la courbe charge/déformation de l'attache L1 est L23.

L'invention est particulièrement avantageuse lorsque le rapport entre les variations dynamiques de charge autour de la charge statique et la charge statique est faible, ce qui est le cas de la charge appliquée aux attaches moteur en régime de croisière.

## Revendications

1. Structure d'aéronef comprenant une attache (10) destinée à relier un moteur à ladite structure, ladite attache comprenant un ressort métallique (6) à disques et étant adaptée pour vérifier les conditions suivantes:
- la raideur de l'attache pour des valeurs de charges comprises dans une plage déterminée ([CA, CB]) est inférieure à la raideur de l'attache pour les valeurs de charges inférieures, respectivement supérieures, à la plage déterminée, la raideur de l'attache étant fonction de la raideur du ressort pour les valeurs de charges comprises dans la plage déterminée ([CA, CB]) et pour les valeurs de charges inférieures et supérieures à la plage déterminée,
- considérant une première valeur de charge (CS2) correspondant à un premier mode de fonctionnement opérationnel (MF2}, les valeurs de charge résultant des variations dynamiques lors dudit premier mode de fonctionnement autour de ladite première valeur (CS2) se trouvent dans la plage déterminée,
l'attache comportant des moyens limitant le déplacement du ressort à une valeur maximum donnée lors de l'application d'une charge d'une valeur supérieure à la plage déterminée ([CA, CB]), les moyens limitant le déplacement comportent au moins une butée (15,5) limitant le déplacement du ressort (6) lors de l'application d'une charge d'une valeur supérieure à la plage déterminée ([CA, CB]), l'attache étant adaptée pour fonctionner selon trois modes :
- un mode à raideur réduite associé au premier mode de fonctionnement opérationnel (MF2),
- un premier mode à raideur élevée, dit mode (MF1), associé à un fonctionnement avec des charges, sur l'attache, inférieures aux charges du mode de fonctionnement opérationnel (MF2),
- un second mode à raideur élevée, dit mode (MF3), associé à un fonctionnement avec des charges, sur l'attache, supérieures aux charges du mode de fonctionnement opérationnel (MF2),
**caractérisé en ce que** l'attache comporte un dispositif (5) apte à exercer une précontrainte sur le ressort (6), la valeur inférieure (CA) de la plage déterminée ([CA, CB]) étant fixée au moins par une précontrainte exercée par ledit dispositif, le dispositif (5) étant une base à visser disposée dans une cavité intérieure (13) de la structure (4) de l'aéronef, sous le ressort (6), et étant engagée dans un pas de vis (8) de la surface de la cavité intérieure (13) de la structure (4).

2. Structure d'aéronef selon la revendication 1, dans laquelle le dispositif (5) apte à exercer une précontrainte est adapté pour faire varier la précontrainte exercée en fonction d'au moins une valeur de charge statique courante appliquée sur le ressort (6).

## Patentansprüche

1. Luftfahrzeugsstruktur, die eine Aufhängung (10) enthält, welche dazu bestimmt ist, einen Motor mit der Struktur zu verbinden, wobei die Aufhängung eine metallische Scheibenfeder (6) enthält und geeignet ist, die folgenden Bedingungen zu erfüllen:
- die Steifheit der Aufhängung für in einem bestimmten Bereich ([CA, CB]) liegende Lastwerte ist geringer als die Steifheit der Aufhängung für die Lastwerte, die niedriger bzw. höher als der bestimmte Bereich sind, wobei die Steifheit der Aufhängung von der Steifheit der Feder für die im bestimmten Bereich ([CA, CB]) liegenden Lastwerte und für die niedrigeren und höheren Lastwerte als der bestimmte Bereich abhängt,
- bei Berücksichtigung eines ersten Lastwerts (CS2) entsprechend einer ersten operativen Betriebsart (MF2} befinden sich die während der ersten Betriebsart aus den dynamischen Schwankungen um den ersten Wert (CS2) resultierenden Lastwerte im bestimmten Bereich,
wobei die Aufhängung Einrichtungen aufweist, die die Verschiebung der Feder bei der Anwendung einer Last eines Werts höher als der bestimmte Bereich ([CA, CB]) auf einen gegebenen maximalen Wert beschränken, wobei die die Verschiebung beschränkenden Einrichtungen mindestens einen Anschlag (15, 5) aufweisen, der die Verschiebung der Feder (6) bei der Anwendung einer Last eines Werts höher als der bestimmte Bereich ([CA, CB]) beschränkt, wobei die Aufhängung geeignet ist, um gemäß drei Arten zu arbeiten:
- einer Art mit verringerter Steifheit, die der ersten operativen Betriebsart (MF2) zugeordnet ist,
- einer ersten Art mit erhöhter Steifheit, Art (MF1) genannt, die einem Betrieb mit Lasten an der Aufhängung zugeordnet ist, die niedriger sind als die Lasten der operativen Betriebsart (MF2),
- einer zweiten Art mit erhöhter Steifheit, Art (MF3) genannt, die einem Betrieb mit Lasten an der Aufhängung zugeordnet ist, die höher sind als die Lasten der operativen Betriebsart (MF2),
**dadurch gekennzeichnet, dass** die Aufhängung eine Vorrichtung (5) aufweist, die eine Vorspannung auf die Feder (6) ausüben kann, wobei der untere Wert (CA) des bestimmten Bereichs ([CA, CB]) mindestens durch eine von der Vorrichtung ausgeübte Vorspannung festgelegt wird, wobei die Vorrichtung (5) eine zu schraubende Bodenplatte ist, die in einem inneren Hohlraum (13) der Struktur (4) des Luftfahrzeugs unter der Feder (6) angeordnet und in einen Gewindegang (8) der Oberfläche des inneren Hohlraums (13) der Struktur (4) eingeführt ist.

2. Luftfahrzeugstruktur nach Anspruch 1, wobei die Vorrichtung (5), die eine Vorspannung ausüben kann, geeignet ist, um die ausgeübte Vorspannung abhängig von mindestens einem auf die Feder (6) ausgeübten laufenden statischen Lastwert zu variieren.

## Claims

1. Aircraft structure comprising an attachment (10) intended to link an engine to said structure, said attachment comprising a metal spring (6) with discs and being designed to satisfy the following conditions:
- the stiffness of the attachment for load values lying in a determined range ([CA, CB]) is less than the stiffness of the attachment for load values below, respectively above, the determined range, the stiffness of the attachment being a function of the stiffness of the spring for the load values lying in the determined range ([CA, CB]) and for the load values below and above the determined range,
- considering a first load value (CS2) corresponding to a first operational mode of operation (MF2), the load values resulting from the dynamic variations in said first mode of operation around said first value (CS2) are located within the determined range,
the attachment comprising means limiting the displacement of the spring to a given maximum value upon the application of a load of a value above the determined range ([CA, CB]), the means limiting the displacement comprise at least one abutment (15, 5) limiting the displacement of the spring (6) upon the application of a load of a value above the determined range ([CA, CB]), the attachment being designed to operate according to three modes:
- a reduced stiffness mode associated with the first operational mode of operation (MF2),
- a first high stiffness mode, called mode (MF1), associated with an operation with loads, on the attachment, less than the loads of the operational mode of operation (MF2),
- a second high stiffness mode, called mode (MF3), associated with an operation with loads, on the attachment, greater than the loads of the operational mode of operation (MF2),
**characterized in that** the attachment comprises a device (5) suitable for exerting a prestress on the spring (6), the lower value (CA) of the determined range ([CA, CB]) being set at least by a prestress exerted by said device, the device (5) being a base to be screw-fastened arranged in an internal cavity (13) of the structure (4) of the aircraft, under the spring (6) and being engaged in a screw thread (8) of the surface of the internal cavity (13) of the structure (4).

2. Aircraft structure according to Claim 1, in which the device (5) suitable for exerting a prestress is designed to vary the exerted prestress as a function of at least one current static load value applied to the spring (6).
